Europäisches Patentamt

European Patent Office

Office européen des brevets

(11) Veröffentlichungsnummer: **0 152 907**
**A2**

(12) **EUROPÄISCHE PATENTANMELDUNG**

(21) Anmeldenummer: **85101548.7**

(22) Anmeldetag: **13.02.85**

(51) Int. Cl.⁴: **B 01 D 53/36**

(30) Priorität: **17.02.84 DE 3405649**

(43) Veröffentlichungstag der Anmeldung: **28.08.85**
**Patentblatt 85/35**

(84) Benannte Vertragsstaaten: **AT BE CH DE FR GB IT LI LU NL SE**

(71) Anmelder: **Uhde GmbH,**
**Friedrich-Uhde-Strasse 15 Postfach 262,**
**D-4600 Dortmund 1 (DE)**

(72) Erfinder: **Wolstein, Friedrich, Dr. Dipl.-Chem.,**
**Goethe-Strasse 66, D-4300 Essen (DE)**

(74) Vertreter: **Patentanwälte Meinke und Dabringhaus**
**Dipl.-Ing. J. Meinke Dipl.-Ing. W. Dabringhaus,**
**Westenhellweg 67, D-4600 Dortmund 1 (DE)**

(54) Verfahren zur Verringerung des NOx-Gehaltes in Kohlenwasserstoff enthaltenden Abgasen.

㊸ Die Erfindung richtet sich auf ein Verfahren zur Verringerung des $NO_x$-Gehaltes in Kohlenwasserstoff enthaltenen Abgasen aus mittels fossiler Brennstoffe betriebenen Kraftwerden mit einer katalytischen Reduktion der $NO_x$-Gase unter Einsatz eines waschbaren Edelmetallkatalysators. Mit dem Verfahren soll erreicht werden, dass die umweltbelastenden aromatischen Kohlenwasserstoffe in den Abgasen im wesentlichen in CO, $CO_2$ und $H_2O$ zerlegt werden. Dies wird dadurch erreicht, dass die Verringerung zweistufig erfolgt, wobei in der ersten Stufe $N_2O$ erzeugt und in der zweiten Stufe $N_2O$ unter Einsatz eines Reduktionsmittels, wie Kohlenwasserstoffen, Ammoniak od. dgl., zu Stickstoff und Wasser reduziert wird.

ACTORUM AG

Die Erfindung richtet sich auf ein Verfahren zur Verringerung des $NO_x$-Gehaltes in Kohlenwasserstoff enthaltenden Abgasen aus mittels fossiler Brennstoffe betriebenen Kraftwerken mit einer katalytischen Reduktion der $NO_x$-Gase unter Einsatz eines waschbaren Edelmetallkatalysators.

Der $NO_x$-Gehalt in Abgasen stellt eine wesentliche Umweltbelastung dar, so daß es eine Vielzahl von Lösungsversuchen gibt, die Belastung durch diese Schadstoffe so gering wie möglich zu halten. Dazu gehört auch die Reduzierung sonstiger Schadstoffe in diesen Abgasen, beispielsweise der Kohlenwasserstoffe, auch der aromatischen Kohlenwasserstoffe. Einige Lösungsmöglichkeiten, diesem Problem Herr zu werden, beschreibt die DE-A-34 05 650 der Anmelderin bzw. die entsprechende WO 85/00300.

Die Erfindung hat sich die Aufgabe gestellt, eine Lösung zu schaffen, mit der die Verringerung der Schadstoffe in Abgasen erreicht und damit die Umweltschädlichkeit der Abgase insgesamt gemindert wird.

Mit einem Verfahren der eingangs bezeichneten Art wird diese Aufgabe gemäß der Erfindung dadurch gelöst, daß die Reduktion zweistufig erfolgt, wobei in der ersten Stufe $N_2O$ (Lachgas) erzeugt und in der zweiten Stufe $N_2O$ unter Einsatz eines weiteren Reduktionsmittels, wie Kohlenwasser-

0152907

stoffen, Ammoniak od. dgl., zu Stickstoff und Wasser reduziert wird.

Mit der zweistufigen Verringerung über den Erzeugungsschritt von Lachgas, d. h. $N_2O$ in der ersten Stufe, wird
eine besonders hohe Reduzierung des $NO_x$-Gehaltes ebenso
erreicht, wie der Zugriff zu den aromatischen Kohlenwasserstoffen erleichtert wird.

In Ausgestaltung sieht die Erfindung vor, daß im Abgasstrom der Sauerstoffgehalt im Bereich von 0,1 bis 5 Volumenprozent gehalten wird.

Mit dieser Verfahrensweise wird erreicht, daß die aromatischen Kohlenwasserstoffe im wesentlichen in CO, $CO_2$ und
$H_2O$ zerlegt werden.

Die Erfindung sieht auch vor, daß die Reduktion bei einer
Abgastemperatur im Bereich bis 180° C durchgeführt wird.
Diese Bandbreite soll kenntlich machen, daß die Oxidation
der Kohlenwasserstoffe erfindungsgemäß auch in Temperaturbereichen durchzuführen ist, die unterhalb des Taupunktes der Abgase liegen. Es sei darauf hingewiesen, daß
die Erfindung nicht auf den beanspruchten Temperaturbereich beschränkt ist. Dieser ist allerdings besonders
zweckmäßig.

In weiterer Ausgestaltung ist vorgesehen, daß als Katalysator ein solcher mit einem säurebeständigen Träger eingesetzt wird. Mit dieser Verfahrensweise wird erreicht, daß ein dauerhafter störungsfreier Betrieb einer nach dem hier beanspruchten Verfahren arbeitenden Anlage gewährleistet ist.

Die Erfindung sieht auch vor, daß wenigstens ein Teil der Oxidation der aromatischen Kohlenwasserstoffe in Abgasen durch Reduktion von $NO_x$ erfolgt.

Die Erfindung richtet sich auch auf einen Katalysator zum Einsatz in dem oben beschriebenen Verfahren. Erfindungsgemäß zeichnet sich ein derartiger Katalysator dadurch aus, daß der Edelmetallgehalt der beiden Stufenkatalysatoren 0,1 bis 2 % beträgt. Unter Edelmetallen ist das gesamte Feld zu verstehen, insbesondere aber das bei Katalysatoren häufig eingesetzte Platin.

Der Katalysator soll erfindungsgemäß auch einen Träger aufweisen, der säurebeständig ist, wie dies die Erfindung ebenfalls vorsieht. Dies zuletzt insbesondere, um für die Katalysatoren optimale Standzeiten zu erreichen, insbesondere gegenüber den sich aus den Rauchgasen bildenden Säuren aus den Abgasen. Hier kann es immer zur Bildung von z.B. schwefeliger oder von Schwefelsäure kommen.

Patentansprüche:

1. Verfahren zur Verringerung des $NO_x$-Gehaltes in Kohlenwasserstoff enthaltenden Abgasen aus mittels fossiler Brennstoffe betriebenen Kraftwerken mit einer katalytischen Reduktion der $NO_x$-Gase unter Einsatz eines waschbaren Edelmetallkatalysators,

dadurch gekennzeichnet,

daß die Reduktion zweistufig erfolgt, wobei in der ersten Stufe $N_2O$ (Lachgas) erzeugt und in der zweiten Stufe $N_2O$ unter Einsatz eines weiteren Reduktionsmittels, wie Kohlenwasserstoffen, Ammoniak od. dgl., zu Stickstoff und Wasser reduziert wird.

2. Verfahren nach Anspruch 1,

dadurch gekennzeichnet,

daß im Abgasstrom der Sauerstoffgehalt im Bereich von 0,1 bis 5 Volumenprozent gehalten wird.

3. Verfahren nach Anspruch 2,

dadurch gekennzeichnet,

daß die Reduktion bei einer Abgastemperatur im Bereich bis 180° C durchgeführt wird.

4. Verfahren nach Anspruch 1, 2 oder 3,

dadurch gekennzeichnet,

0152907

daß als Katalysator ein solcher mit einem säurebeständigen Träger eingesetzt wird.

5. Katalysator zum Einsatz in einem Verfahren nach den Ansprüchen 1 bis 4,
dadurch gekennzeichnet, daß der Edelmetallgehalt der beiden Stufenkatalysatoren 0,1 - 2 % beträgt.

6. Katalysator nach den Ansprüchen 5,
dadurch gekennzeichnet,
daß als Edelmetall Platin eingesetzt wird.